# FASCICULE DE BREVET EUROPEEN

(11) **EP 0 499 526 B1**
(45) Date de publication et mention de la délivrance du brevet: **03.01.1996**
(21) Numéro de dépôt: 92400350.2
(22) Date de dépôt: 11.02.1992
(51) Int. Cl.: F16F 7/00

(54) **Système d'amortissement notamment pour systèmes d'arme**
Dämpfungssystem, insbesondere für Waffensysteme
Damping system for weapon systems

(30) Priorité: 12.02.1991 FR 9101621
(43) Date de publication de la demande: 19.08.1992
(73) Titulaire: ETIENNE LACROIX - TOUS ARTIFICES SA, F-31600 Muret (FR)
(72) Inventeur: Leau, Philippe, F-31300 Toulouse (FR)
(74) Mandataire: Martin, Jean-Jacques

(56) Documents cités:
- EP-A- 0 212 712
- EP-A- 0 429 320
- BE-A- 644 897
- DE-A- 3 615 070
- DE-C- 471 359
- US-A- 3 105 411
- US-A- 3 923 292
- Patent Abstract of Japan vol.7,no.79(M-204)(1224) 31 Mars 1983, JP-A-58 5550(MITSUBISHI JUKOGYO KK) 12 JAN. 1983

## Description

La présente invention concerne le domaine des systèmes amortisseurs.

La présente invention s'applique en particulier, mais non exclusivement, au domaine des systèmes d'armes munis d'un dispositif d'amortissement.

De nombreux systèmes amortisseurs ont déjà été proposés. On a en particulier proposé de nombreux systèmes amortisseurs à base de ressorts, comme décrit par exemple dans les documents US-A-4895061, FR-A-2588370, US-A-4672881, US-A-4388855, US-A-3387538, US-A-1483129, US-A-2273878, US-A-2363675. On a également proposé différents systèmes amortisseurs exploitant l'écoulement fluidique de produits pulvérulents ou de particules pleines et solides comme décrit par exemple dans les documents US-A-3417660, US-A-3251720, DE-A-2212685, DE-A-471359, US-A-3105411. Le document US-A-3923292 décrit un système amortisseur conforme au préambule de la revendication 1 annexée, conçu pour être placé entre une référence fixe et un élément mobile par rapport à la référence fixe, par exemple sous forme d'amortisseur de véhicule, comprenant un bloc de billes comprenant une peau rigide et au moins un piston pénétrateur, l'un des deux éléments : bloc de billes et piston pénétrateur étant associé à la référence fixe, tandis que l'autre des deux éléments : bloc de billes et piston pénétrateur est associé à l'élément mobile de sorte que la pénétration du piston dans le bloc de billes amortisse l'effort appliqué à la référence fixe, suite à la déformation résultante de la peau de bille.

Toutefois, ces systèmes amortisseurs connus ne donnent pas totalement satisfaction.

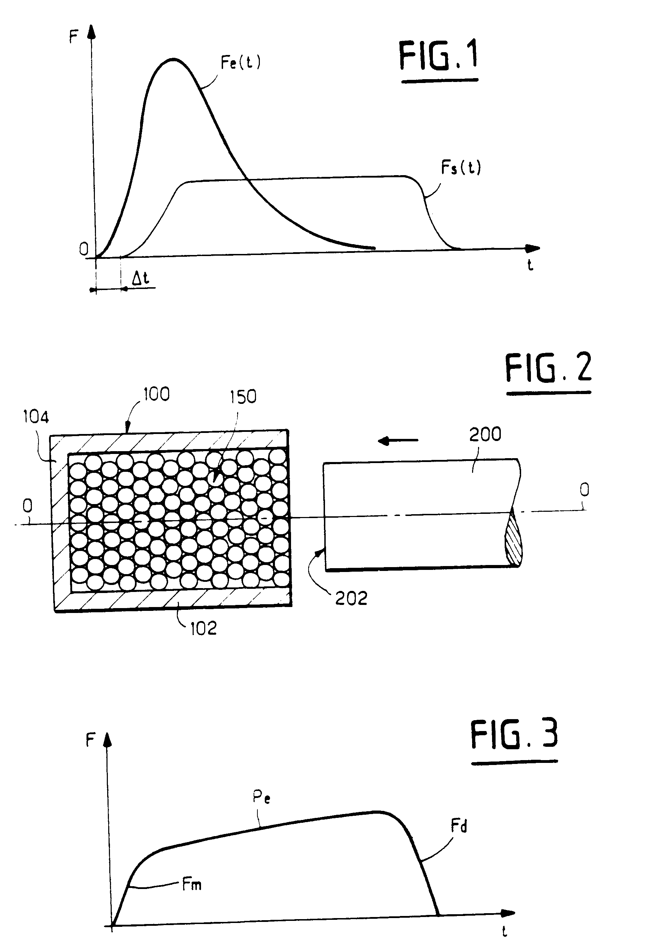

Le but principal de la présente invention est de proposer un dispositif d'amortissement apte à amortir un effort d'entrée appliqué à une référence fixe suite au déplacement ou au choc d'un élément mobile par rapport à la référence fixe. Plus précisément encore, le but principal de la présente invention est de transformer l'effort d'entrée Fe(t) appliqué à la référence fixe en un effort de sortie Fs(t) de plus faible amplitude, comme représenté sur la figure 1.

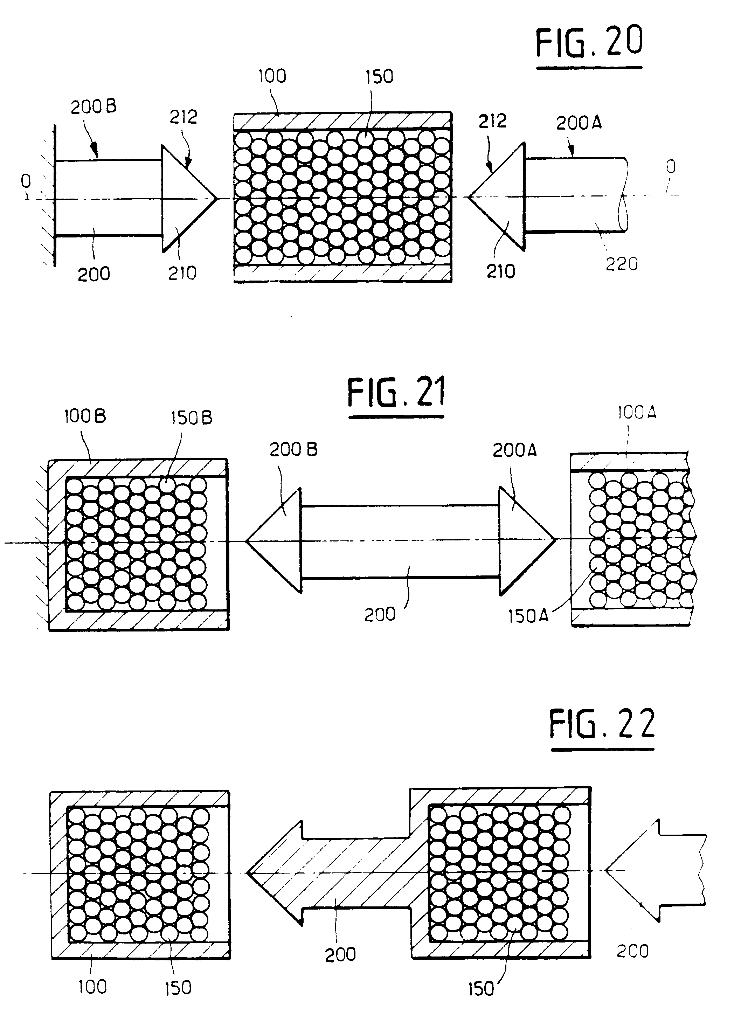

Ce but est atteint selon la présente invention grâce à un système d'amortissement conçu pour être placé entre une référence fixe et un élément mobile par rapport à la référence fixe, comprenant :
- au moins un bloc de billes comprenant une peau rigide, et
- au moins un piston-pénétrateur, l'un des deux éléments : bloc de billes et piston-pénétrateur étant associé à la référence fixe, tandis que l'autre des deux éléments : bloc de billes et piston-pénétrateur est associé à l'élément mobile de sorte que la pénétration du piston dans le bloc de billes amortisse l'effort applique à la référence fixe suite à la déformation résultante de la peau des billes, caractérisé par le fait que
   le piston-pénétrateur est étagé, c'est-à-dire qu'il présente un organe d'attaque adjacent au bloc de billes, de forte dimension transversale, relié à un organe support de plus faible dimension transversale.
   Comme cela sera précisé par la suite, on peut prévoir que le bloc de billes soit associé à la référence fixe et que le piston pénétrateur soit associé à l'élément mobile.
   En variante, on peut prévoir que le bloc de billes soit associé à l'élément mobile tandis que le piston-pénétrateur est associé à la référence fixe.
   Le terme "associé" utilisé ci-dessus doit être compris dans un sens large. Il englobe tout type de sollicitation entre le bloc de billes ou le piston-pénétrateur et l'élément associé : référence fixe ou élément mobile, notamment tout type de liaison directe ou indirecte comme cela sera précisé par la suite, en particulier en regard des figures 20 à 22.
   Selon une autre caractéristique avantageuse de la présente invention, la face avant de l'organe d'attaque du piston-pénétrateur, c'est-à-dire la face dirigée vers le bloc de billes est délimitée au moins partiellement par une surface inclinée sur l'axe de déplacement relatif référence fixe/élément mobile.
   Dans le cadre d'une application au système d'arme, la référence fixe peut être formée d'une épaulière ou de poignées pour un tir àl'épaule, ou encore d'un affut, tandis que l'élément mobile est formé d'un tube d'arme guidé à coulissement par rapport à la référence fixe.
   D'autres caractéristiques, buts et avantages de la présente invention apparaîtront à la lecture de la description détaillée qui va suivre et en regard des dessins annexés donnés à titre d'exemples non limitatifs et sur lesquels :
   - la figure 1 précédemment décrite illustre schématiquement l'amortissement d'un effort d'entrée Fe(t) en un effort de sortie Fs(t) obtenu grâce à la présente invention,
   - la figure 2 représente schématiquement un système d'amortissement
   - la figure 3 représente l'effort de sortie Fs(t) obtenu grâce à ce premier mode de réalisation,
   - la figure 4 représente schématiquement un système d'amortissement conforme à un second mode de réalisation de la présente invention,
   - la figure 5 représente l'effort de sortie Fs(t) obtenu grâce à ce second mode de réalisation,
   - la figure 6 représente schématiquement un système d'amortissement conforme à un troisième mode de réalisation de la présente invention,

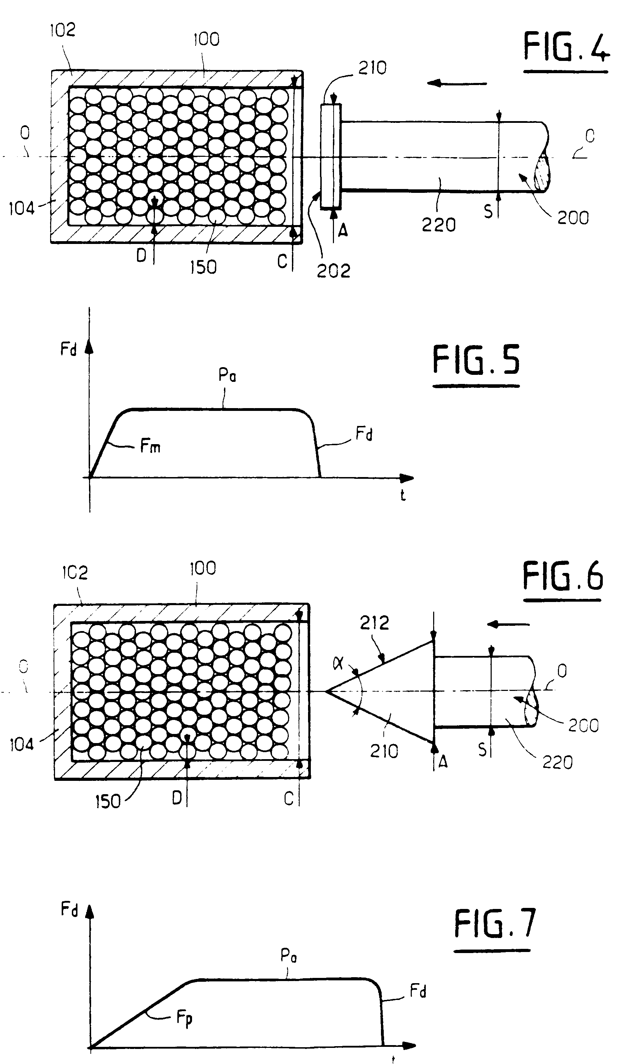

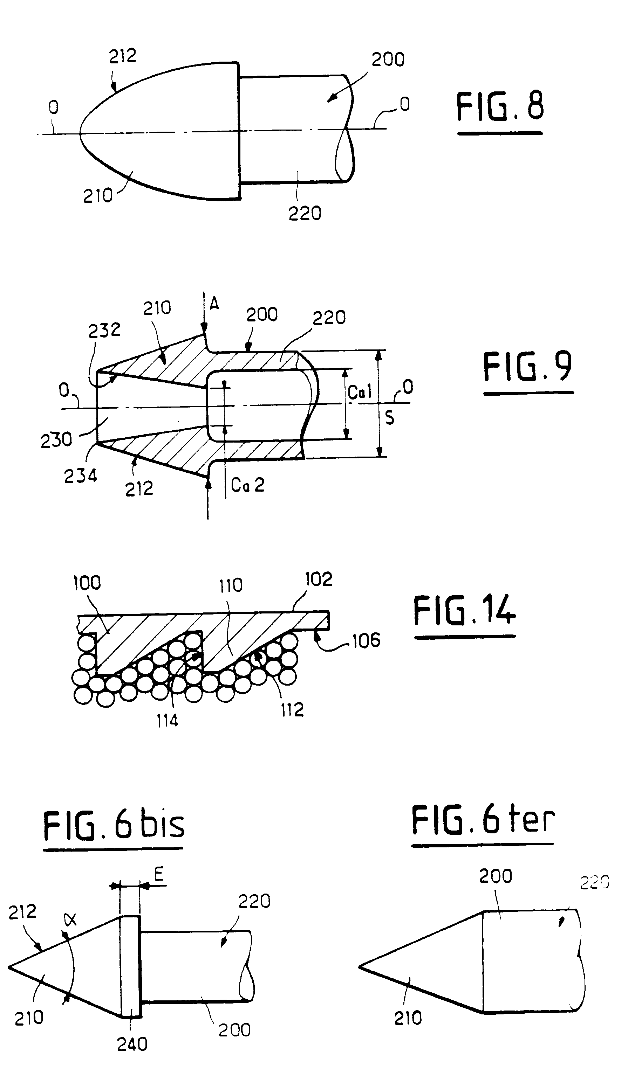

   - la figure 6bis représente une variante du piston-pénétrateur de ce troisième mode de réalisation,
   - la figure 6ter représente une autre variante du piston,
   - la figure 7 représente l'effort de sortie Fs(t) obtenu grâce à ce troisième mode de réalisation,
   - la figure 8 représente une vue latérale d'une variante de réalisation d'un piston-pénétrateur,
   - la figure 9 représente une vue en coupe axiale d'une autre variante de réalisation d'un piston-pénétrateur,

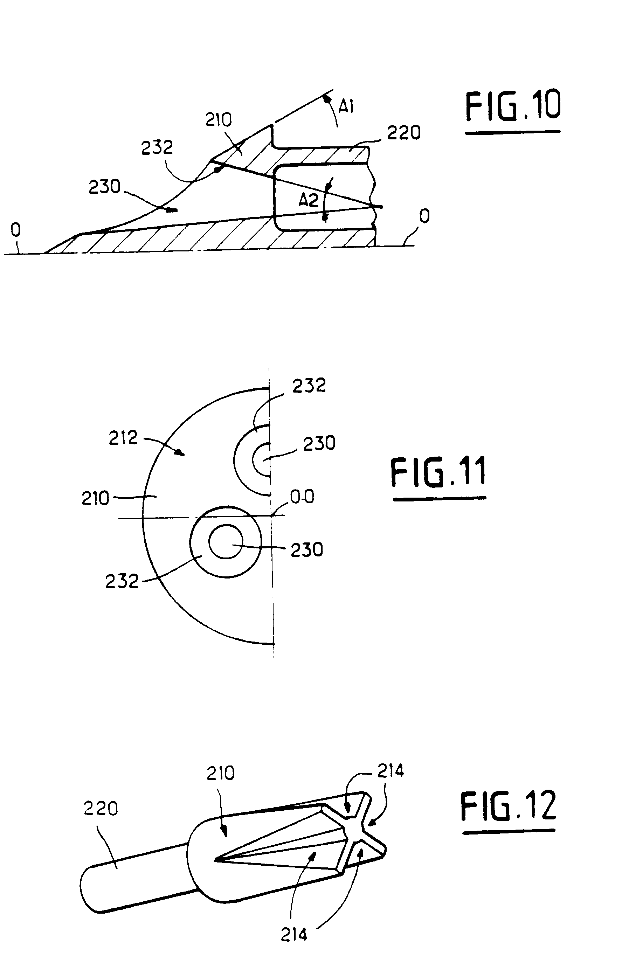

   - la figure 10 représente une demi-vue en coupe axiale d'une autre variante de réalisation d'un piston-pénétrateur,
   - la figure 11 représente une vue de face de la variante illustrée sur la figure 10,
   - la figure 12 représente une vue en perspective d'une autre variante de réalisation d'un piston-pénétrateur,

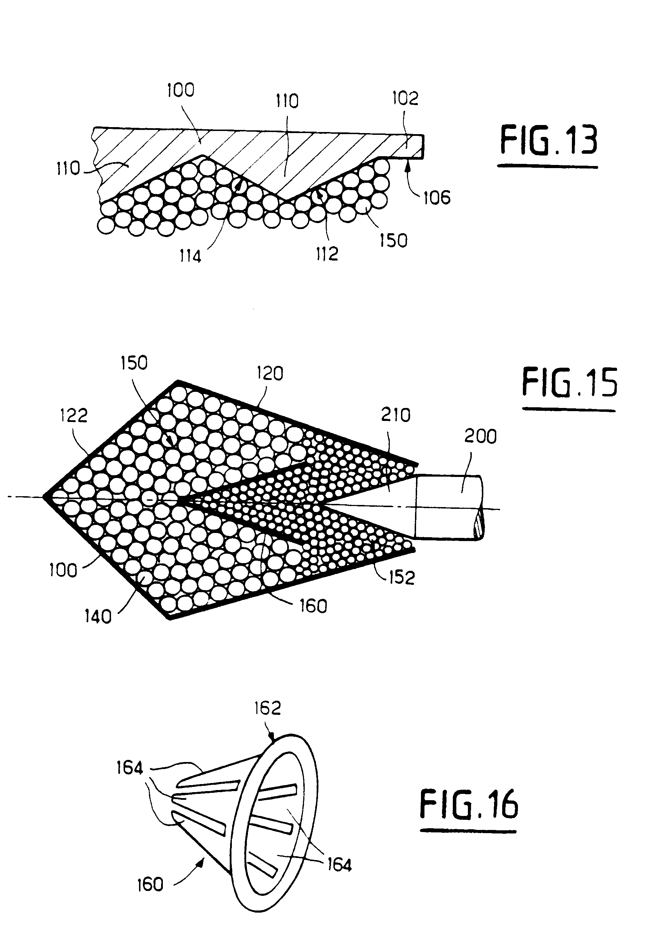

   - la figure 13 représente une vue de détail d'une variante de réalisation d'un conteneur recevant le bloc de billes,
   - la figure 14 représente une autre variante de réalisation du conteneur,
   - la figure 15 représente une autre variante de réalisation du conteneur,
   - la figure 16 représente une vue en perspective d'un insert destiné à être placé dans le bloc de billes,

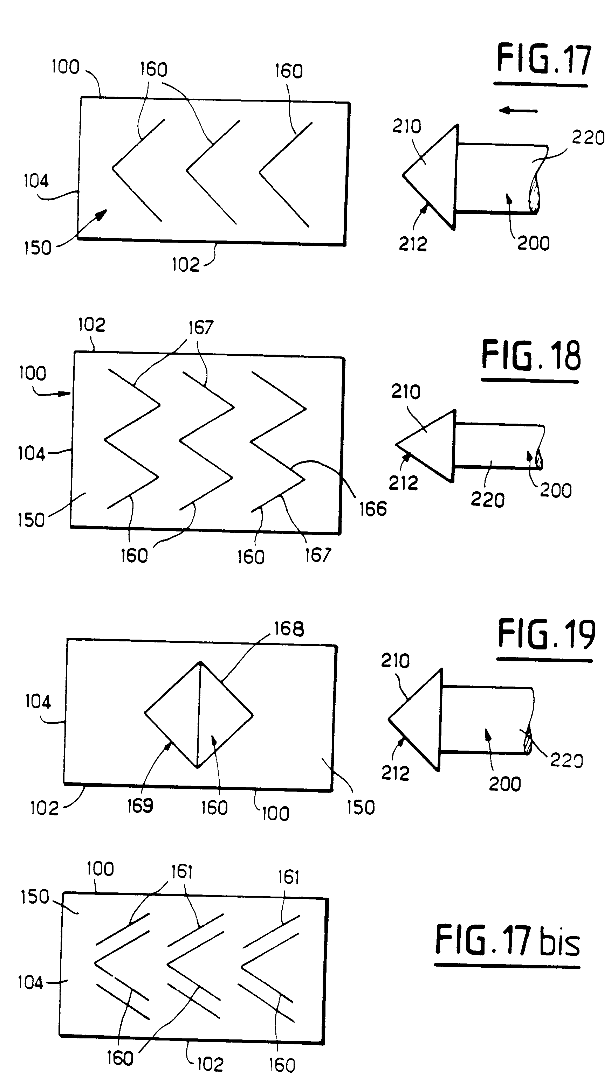

   - les figures 17, 18 et 19 représentent trois variantes de réalisation du système dans lesquelles, les conteneurs logeant le bloc de billes contiennent en outre des inserts,
   - la figure 17bis représente une variante des inserts illustrés sur la figure 17,
   - les figures 20, 21 et 22 représentent trois autres variantes de réalisation du système d'amortissement conforme à la présente invention,

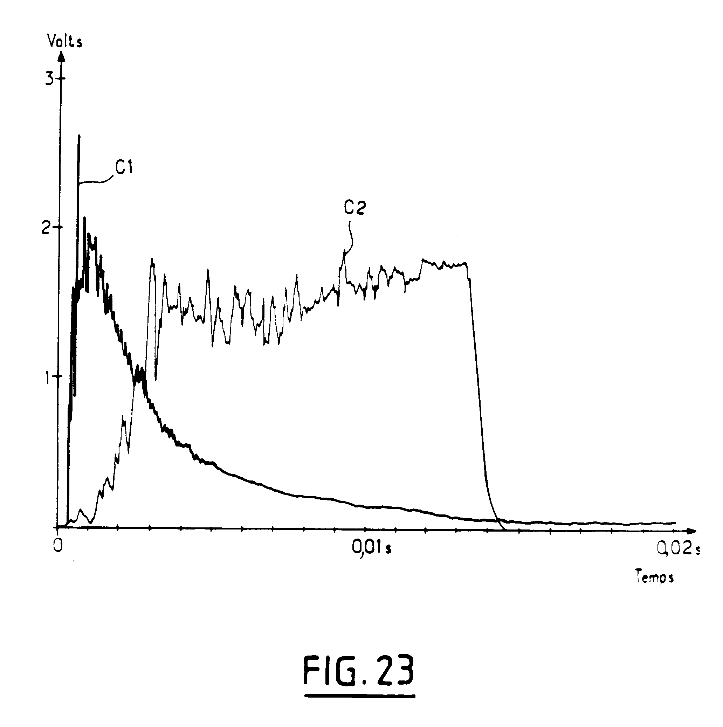

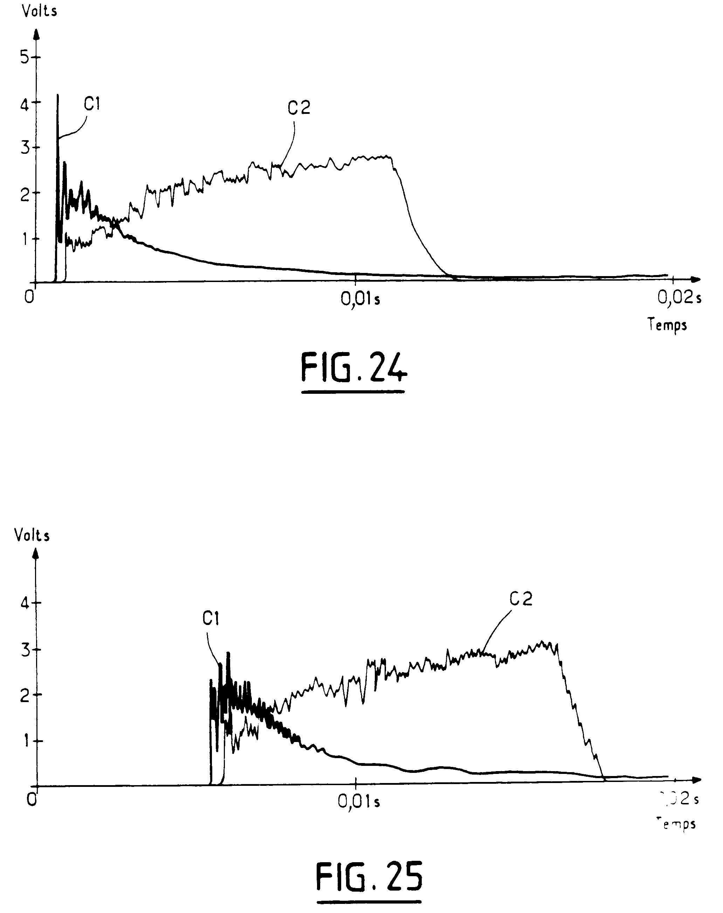

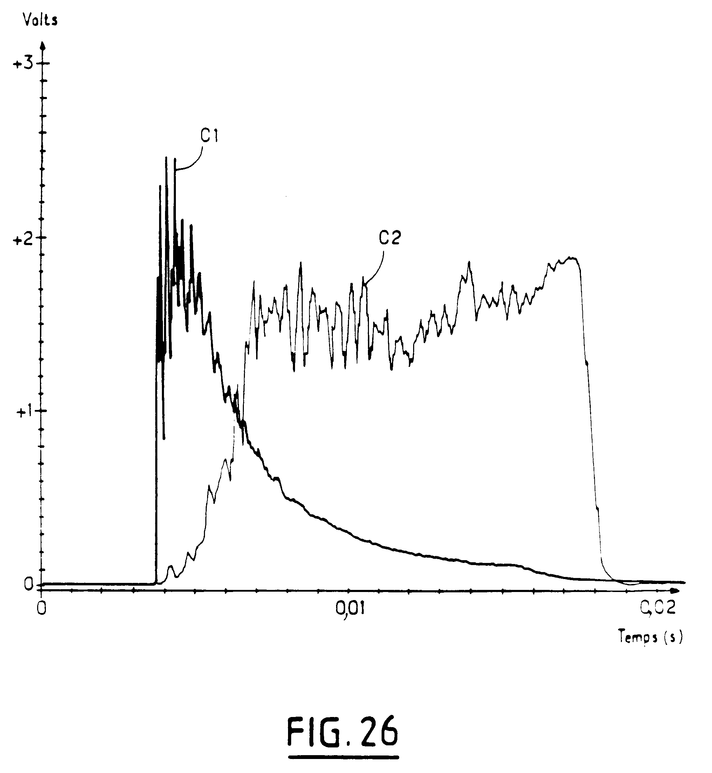

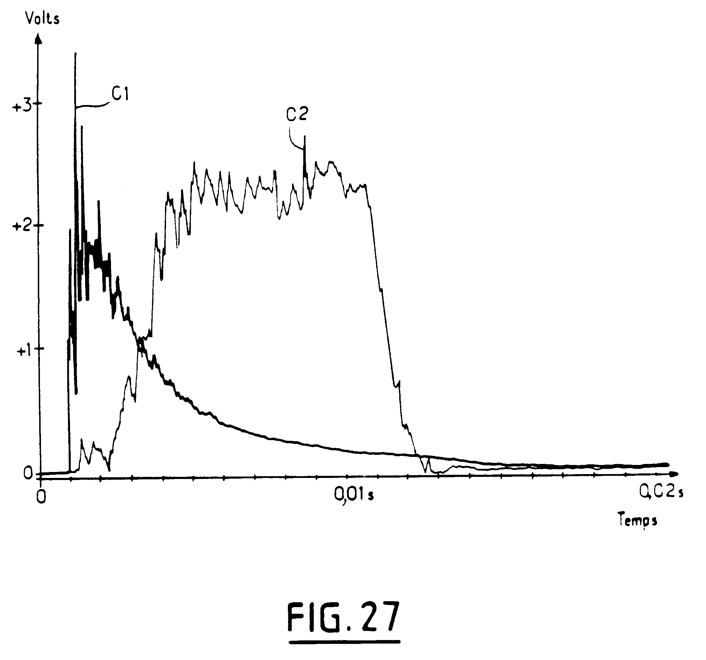

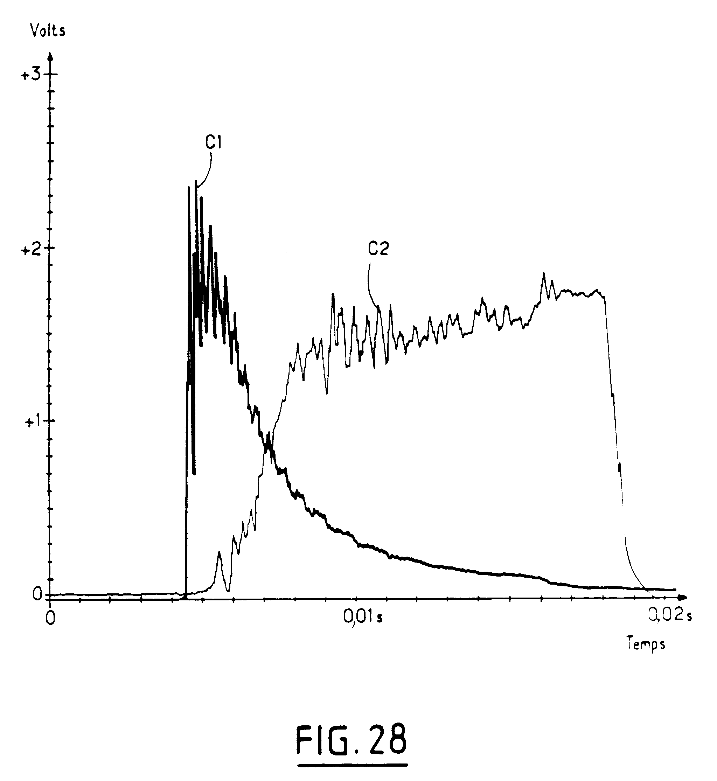

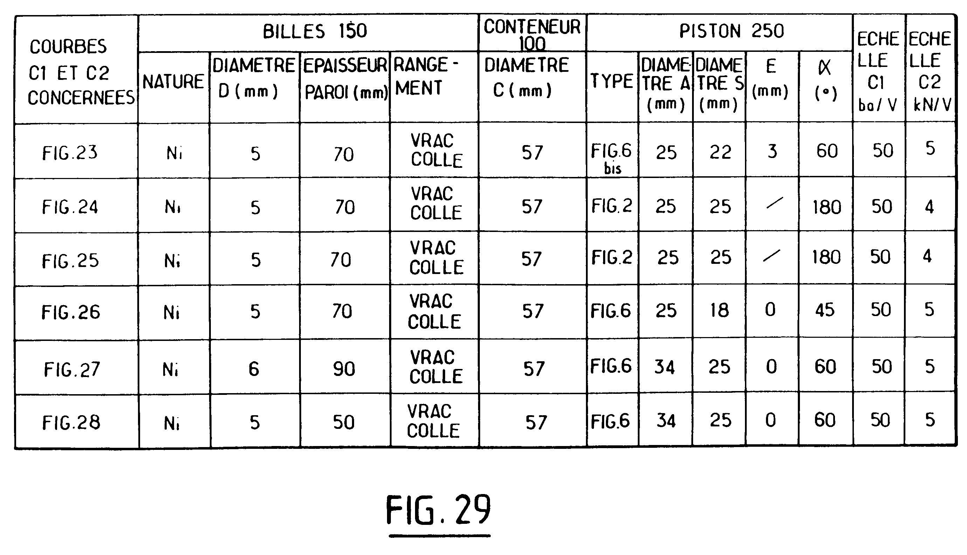

   - les figures 23, 24, 25, 26, 27 et 28 représentent des courbes mesurées sur des systèmes d'arme comprenant d'une part une mesure de pression dans le tube d'arme, représentative de l'effort d'entrée appliqué sur l'amortisseur et d'autre part une mesure de l'effort de sortie appliqué sur la référence fixe,
   - la figure 29 donne les conditions opératoires correspondant aux figures 23 à 28, et

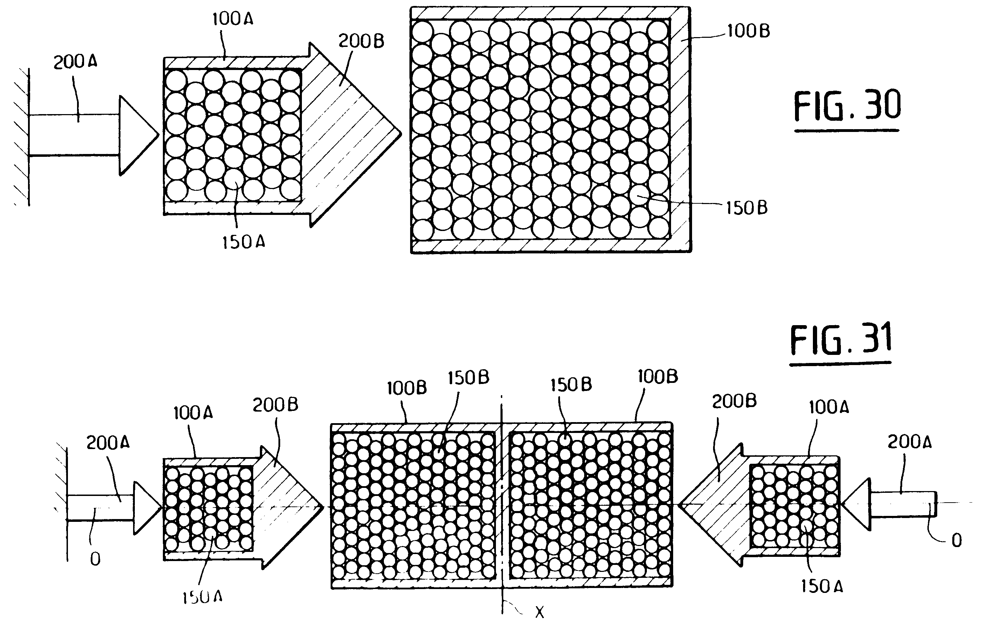

   - les figures 30 et 31 représentent deux autres variantes de réalisation du système d'amortissement conforme à la présente invention.

   Le système d'amortissement représenté sur la figure 2 comprend un conteneur 100 logeant un bloc de billes 150 d'une part, et un piston-pénétrateur 200 d'autre part.
   Le piston-pénétrateur 200 et le conteneur 100 sont susceptibles de translation relative selon un axe O-O. Selon une première configuration le conteneur 100 peut être fixe, tandis que le piston-pénétrateur 200 est mobile. Ainsi, dans le cas d'une application aux systèmes d'arme, le conteneur 100 peut être solidaire de la référence fixe, tandis que le piston-pénétrateur 200 est solidaire du tube d'arme coulissant.
   Inversement, selon une seconde configuration, le conteneur 100 peut être mobile, tandis que le piston-pénétrateur 200 est fixe. Ainsi, dans le cas d'une application aux systèmes d'arme, le conteneur 100 peut être solidaire du tube d'arme coulissant, tandis que le piston-pénétrateur 200 est solidaire de la référence fixe.
   Le conteneur 100 est formé de préférence d'une paroi 102 cylindrique de révolution autour de l'axe O-O. Toutefois, le conteneur peut faire l'objet de nombreuses variantes. Il peut être non cylindrique par exemple de section carrée. Le conteneur 100 est borgne selon la figure 2. La paroi 102 est fermée par une paroi transversale 104 à son extrémité opposée au piston 200. Ainsi, le conteneur 100 est ouvert en direction du piston 200. Toutefois la paroi 102 n'est pas indispensable. Le conteneur 100 loge un bloc de billes 150. Les billes sont de préférence disposées selon un agencement régulier. Très préférentiellement, les billes sont disposées selon un agencement hexagonal compact. Ainsi, chaque bille est elle-même en contact avec douze billes adjacentes. Les couches de billes s'étendent perpendiculairement à l'axe O-O comme représenté sur la figure 2.
   Les billes 150 sont de préférence reliées entre elles par une résine, telle qu'une résine epoxy.
   Les billes 150 comprennent chacune au moins une peau rigide déformable sous l'action d'un effort d'entrée appliqué par le piston-pénétrateur.
   Les billes 150 sont de préférence des billes creuses réalisées en métal ou matière plastique. Le cas échéant, les billes 150 peuvent être formées d'un noyau central en matériau compressible, par exemple du polystyrène, entouré d'une peau extérieure rigide.
   Les billes 150 peuvent être formées selon toute technique classique connue de l'homme de l'art.
   Les billes 150 peuvent par exemple être réalisées en déposant, sur des noyaux solubles dans un solvant, un revêtement de nickel poreux ou un autre matériau équivalent, puis en disposant les noyaux ainsi revêtus dans un solvant jusqu'à dissolution des noyaux, comme indiqué par exemple dans le document FR-A-2585373. Le cas échéant, le noyau soluble peut être éliminé par l'intermédiaire d'une perforation réalisée dans le revêtement comme enseigné par les documents FR-A-1311777 et US-A-4464231.
   Bien entendu les épaisseurs de la peau rigide ou revêtement des billes, ainsi que leur diamètre, peuvent faire l'objet de nombreuses variantes de réalisation, en fonction de la rigidité souhaitée.
   Le piston 200 représenté sur la figure 2 est formé de préférence d'un corps cylindrique de révolution autour de l'axe O-O. Sa face d'attaque 202 dirigée vers le bloc de billes 150 est une face circulaire, plane, orthogonale à l'axe O-O.
   Toutefois le piston 200 peut faire l'objet de nombreuses variantes. Il peut être non cylindrique, par exemple de section carrée.
   L'effort ressenti par le conteneur 100 lorsque le piston 200 pénètre dans le bloc de billes 150 et déforme celles-ci suite à un effort d'entrée Fe(t) appliqué au piston 200 du type représenté sur la figure 1, est illustré sur la figure 3.
   L'effort ressenti par le conteneur 100 illustré sur la figure 3 comprend un front montant Fm relativement raide qui correspond à l'impact de la face d'attaque 202 sur le bloc de billes 150, suivi d'une pente ascendante Pe, qui se termine par un front descendant Fd.
   Ainsi, le système d'amortissement représenté sur la figure 2 permet d'amortir nettement l'effort d'entrée Fe(t), notamment en étalant celui-ci dans le temps.
   Toutefois, la demanderesse a déterminé que l'obtention d'une pente ascendante Pe au niveau de l'effort de sortie peut s'avérer néfaste.
   En effet, elle ne permet pas toujours de limiter à une valeur seuil précise le maximum de l'effort de sortie.
   En outre et surtout, elle ne permet pas un amortissement optimum, en ce sens qu'elle ne permet pas d'atteindre rapidement et de garantir une valeur écrétée optimum, juste inférieure à la valeur seuil admissible.
   La demanderesse a de ce fait poursuivi ses essais et études.
   La demanderesse a ainsi proposé un mode de réalisation représenté sur la figure 4. On retrouve sur celle-ci un conteneur 100 identique à celui-ci précédemment décrit illustré sur la figure 2 et comprenant un bloc de billes 150, ainsi qu'un piston-pénétrateur 200. Toutefois, à la différence du mode de réalisation représenté sur la figure 2, selon la variante de la figure 4, le piston 200 ne présente plus une section constante sur toute sa longueur. Selon la figure 4, le piston 200 est étagé. Il possède un organe d'attaque 210 adjacent au bloc de billes 150. L'organe d'attaque 210 est formé de préférence d'un corps cylindrique de révolution, de diamètre A. La face d'attaque 202 de l'organe 210, qui est dirigée vers le bloc 150, est circulaire, plane, et orthogonale à l'axe O-O. L'organe d'attaque 210 est relié à un élément support 220 formé d'un corps cylindrique de révolution autour de l'axe O-O mais de plus faible section que l'organe 210. L'élément support 220 possède un diamètre S.
   Comme indiqué précédemment, le piston 200 peut ne pas être cylindrique de révolution. Il en est de même pour l'organe d'attaque 210. Par exemple, l'organe d'attaque 210 et l'élément support peuvent être de section carrée ou triangulaire (de préférence de section similaire au conteneur 100).
   Selon une caractéristique avantageuse de la présente invention, la différence entre les diamètres ou dimensions transversales A et S est au moins égale à deux fois préférentiellement à quatre fois le diamètre D des billes 150.
   Par ailleurs, de préférence la différence entre le diamètre interne ou dimension transversale interne C du conteneur 100 et le diamètre ou dimension transversale A est également au moins égal à deux fois préférentiellement à quatre fois le diamètre D des billes 150.
   Les dispositions qui précèdent se sont révélées optimum suite aux essais réalisés par la demanderesse.
   L'effort ressenti par le conteneur 100 lorsque le piston 200 représenté sur la figure 4 pénètre dans le bloc de billes 150 et déforme celles-ci suite à un effort d'entrée appliqué au piston 200 de même valeur et de même allure que celui évoqué précédemment en regard des figures 2 et 3, est illustré sur la figure 5.
   L'effort ressenti par le conteneur 100 illustré sur la figure 5 comprend un front montant Fm identique à celui représenté sur la figure 3. Ceci s'explique par le fait que les faces d'attaque 202 sont identiques, de même superficie dans le cas de la figure 2 et dans le cas de la figure 4. Toutefois, sur la figure 5 on note que le front montant Fm n'est pas suivi d'une pente ascendante Pe mais d'un palier d'amplitude constante Pa, jusqu'à atteinte du front descendant Fd. La suppression de la pente ascendante Pe s'explique par le fait que l'élément support 220 possédant un diamètre inférieur à l'organe d'attaque 210, selon la figure 4, l'élément support n'applique pas d'effort de frottement sur le bloc de billes 150. Par conséquent, l'effort appliqué au conteneur 100 est dû uniquement à la pression appliquée par la face d'attaque 202 et provoquant la déformation des billes.
   Le mode de réalisation représenté sur la figure 4 dans lequel le piston-pénétrateur 200 est étagé est donc préféré au mode de réalisation de la figure 3. Il permet en effet de limiter à une valeur précise le maximum de l'effort de sortie appliqué au conteneur 100. En outre, il permet un amortissement optimum, en ce sens qu'il permet d'atteindre rapidement et de garantir une valeur écrétée optimum, juste inférieure à la valeur seuil admissible.
   La demanderesse a de plus proposé un autre mode de réalisation représenté sur la figure 6. On retrouve sur la figure 6 un conteneur 100 identique à celui précédemment décrit illustré sur la figure 2 et contenant un bloc de billes 150, ainsi qu'un piston-pénétrateur 200.
   Le piston-pénétrateur 200 est étagé comme enseigné précédemment à partir de la figure 4. A cet effet, le piston-pénétrateur 200 représenté sur la figure 6 comprend un organe d'attaque 210 suivi d'un élément support 220. L'élément support 220 peut être un cylindre de révolution autour de l'axe O-O. Son diamètre est référencé S. Ce diamètre S est inférieur au plus grand diamètre A de l'organe d'attaque 210. Très avantageusement la différence entre les diamètres A et S est au moins égale à deux fois préférentiellement à quatre fois le diamètre D des billes 150.
   Par ailleurs, comme indiqué précédemment de préférence la différence entre le diamètre interne C du conteneur 100 et le plus grand diamètre A de l'organe d'attaque 210 est au moins égal à deux fois préférentiellement à quatre fois le diamètre D des billes 150.
   L'organe d'attaque 210 représenté sur la figure 6 se distingue essentiellement de celui représenté sur la figure 4 par le fait qu'il présente une face d'attaque 212 non plus orthogonale à l'axe O-O, mais inclinée sur cet axe, plus précisément conique autour de cet axe et effilée en direction du bloc de billes 150.
   Dans le cas où le piston 200 n'est pas de révolution, mais par exemple de section carrée ou triangulaire, l'organe d'attaque 212 est pyramidal. Dans ce cas les relations indiquées ci-dessus s'appliquent aux dimensions transversales du piston et du conteneur et non point aux diamètres.
   L'effort ressenti par le conteneur 100 représenté sur la figure 6 lorsque le piston 200 reçoit un effort d'entrée identique à celui évoqué précédemment en regard des figures 2 et 4 est illustré sur la figure 7.
   On note à l'examen de la figure 7 que l'effort ressenti par le conteneur 100 ne comprend plus un front montant raide Fm, mais un front à pente douce Fp. Cette différence par rapport aux figures 3 et 5 s'explique par le fait qu'en raison de sa configuration conique, le piston 200 pénètre progressivement dans le bloc de billes 150 et déforme progressivement celles-ci.
   Cette caractéristique permet de contrôler la phase initiale de l'effort de sortie. Cette disposition est particulièrement avantageuse dans le cadre de l'amortissement d'une arme d'épaule. Elle permet en effet à l'utilisateur d'adapter progressivement l'effort de réaction.
   Le front progressif Fp de la figure 7 est suivi d'un palier Pa identique à la figure 5 (du fait de la suppression des forces de frottement) lui-même suivi d'un front descendant Fd.
   La figure 6bis représente une variante du piston de la figure 6, selon laquelle un talon 240 de section constante A, et d'étendue axiale E est prévu entre l'organe d'attaque 210 et l'élément support 220.
   La figure 8 représente une variante de réalisation de l'organe d'attaque 210 du piston-pénétrateur 200.
   Selon la figure 8, le piston 200 est toujours étagé, mais la face d'attaque 212 de l'organe 210 n'est plus tronconique, mais d'allure générale parabolique de révolution autour de l'axe O-O.
   Bien entendu, l'invention n'est pas limitée à cette disposition. La face d'attaque 212 de l'organe 210 pourrait être formée d'une calotte sphérique ou de tout autre courbure présentant une inclinaison évolutive par rapport à l'axe O-O en fonction de l'évolution du front montant Fm ou Fp recherché pour l'effort de sortie appliqué au conteneur 100.
   Selon la figure 6ter, le piston 200 comprend un organe d'attaque 210 effilé raccordé à un élément support 220. La section de l'élément support 220 est égale à la plus grande section de l'organe d'attaque 210. Le piston 200 représenté sur la figure 6ter donne à la fois un front montant à pente douce Fp et une pente ascendante Pe.
   On a représenté sur la figure 9, une autre variante de réalisation du piston-pénétrateur 200. Le piston représenté sur la figure 9 est également étagé.
   Toutefois, il ne s'agit plus d'un piston-pénétrateur plein. Selon la figure 9, le piston présente un canal central 230. Plus précisément encore, le piston 200 représenté sur la figure 9 comprend un organe d'attaque 210 solidaire d'un élément support 220.
   La surface externe 212 de l'organe d'attaque 210 est tronconique de révolution autour de l'axe O-O. L'élément support 220 possède une surface externe cylindrique de révolution autour de l'axe O-O. Le diamètre externe S de l'élément support 200 est inférieur au plus grand diamètre A de l'organe d'attaque 210. De préférence, la différence entre les diamètres A et S est au moins égale à deux fois préférentiellement à quatre fois le diamètre des billes 150.
   Le canal 230 traverse l'organe d'attaque 210 et au moins partiellement l'élément support 220. Le canal 230 est centré sur l'axe O-O. Au niveau de l'organe d'attaque 210, le canal 230 est évasé en direction du bloc de billes 150. Plus précisément, au niveau de l'organe d'attaque 210, le canal 230 est délimité par une surface tronconique 232. Le plus grand diamètre de la surface tronconique 232 est égal au plus petit diamètre de la surface externe 212 de l'organe d'attaque 210. Ainsi, la jonction entre les surfaces tronconiques 212 et 232, définit une arête vive 234 circulaire autour de l'axe O-O.
   En variante, le plus grand diamètre de la surface tronconique 232 pourrait être inférieur au plus petit diamètre de la surface externe 212. Dans ce cas, la jonction entre les surfaces tronconiques 212 et 112 définirait une surface plane, en couronne, centrée sur l'axe O-O.
   Selon une autre variante, les surfaces tronconiques 212 et 232 pourraient être remplacées par des surfaces paraboliques, sphériques, ou similaires.
   Au niveau de l'élément support 220, le canal 230 est cylindrique de révolution autour de l'axe O-O. Son diamètre Cal est supérieur au plus petit diamètre Ca2 du canal 230 formé dans l'organe d'attaque 210. Grâce à cette disposition, la surface interne de l'élément support 220, qui délimite le canal 230 n'applique aucune force de frottement sur la veine de billes 150 comprimée par la surface d'attaque 232 et susceptible par conséquent de pénétrer dans l'élément support 220 par l'intermédiaire du petit diamètre Ca2.
   Selon une caractéristique avantageuse de l'invention, la différence entre les diamètres Ca1 et Ca2 est au moins égale à deux fois préférentiellement à quatre fois le diamètre D des billes 150.
   Les figures 10 et 11 correspondent à une variante de réalisation de la figure 9.
   En effet, selon les figures 10 et 11, le piston-pénétrateur 200 comprend non plus un seul canal 230 centré sur l'axe O-O, mais une pluralité de canaux similaires 230 équi-répartis autour de cet axe.
   Selon la figure 11, il est ainsi prévu trois canaux 230 équi-répartis autour de l'axe O-O. Cette disposition n'est pas limitative, on peut prévoir un nombre de canaux 230 inférieur ou supérieur à trois.
   De façon comparable à la figure 9, le piston 200 est étagé. Il comprend un élément support 220 présentant un diamètre inférieur au plus grand diamètre de l'organe d'attaque 210. Par ailleurs, chaque canal 230 est délimité par une surface 232 évasée en direction du bloc de billes 150 dans l'organe 110, d'une part, et par une surface cylindrique de révolution au niveau de l'élément support 220. Le diamètre de chaque canal 230 au niveau de l'élément support 220 est supérieur au plus petit diamètre de la surface 232 correspondante.
   Les canaux peuvent être regroupés en un évidement central unique au niveau de l'élément support 220.
   Les angles de divergence A1, A2 des surfaces d'attaque 212 et 232 peuvent être identiques ou différents. Ils sont de préférence compris entre 20 et 60°.
   L'utilisation de surfaces d'attaque 212, 232, non orthogonales àl'axe O-O, mais inclinées sur celui-ci permet non seulement de contrôler l'évolution du front montant Fm, Fp de l'effort de sortie ressenti par le conteneur 100, mais également permet de transformer l'effort d'entrée partiellement en une composante radiale sous forme de contrainte tangentielle dans les billes 150 et le conteneur 100, voire le piston 200 lui-même. Cette disposition permet de limiter l'effort axial appliqué au conteneur 100.
   Selon les modes de réalisation représentés sur les figures 2 à 11, les surfaces d'attaque 212 ou 232 peuvent être essentiellement de révolution autour de l'axe O-O ou d'axes parallèles à l'axe O-O.
   Cependant, cette disposition n'est pas limitative. Ces surfaces d'attaque peuvent par exemple être pyramidales.
   Comme représenté sur la figure 12, la face d'attaque de l'organe 210 peut être délimitée par une ou des surfaces inclinées sur l'axe O-O, sans être de révolution.
   Le piston-pénétrateur 200 représenté sur la figure 12 est étagé. Il comprend un organe d'attaque 210 solidaire d'un élément support 220 de plus faible diamètre. L'organe 210 est formé d'un corps possédant une enveloppe cylindrique de révolution autour de l'axe O-O mais possédant quatre évidements latéraux 214 équi-répartis autour de l'axe O-O. Les évidements 214 ont la forme générale de pyramides triangulaires. Ils font ainsi évoluer progressivement la section de l'organe 210, d'une section circulaire complète, en position adjacente à l'élément support 220, vers une section en croix à quatre branches, sur l'avant, c'est-à-dire en direction du bloc de billes 150.
   Bien entendu, le mode de réalisation représenté sur la figure 12 n'est pas limitatif.
   Les faces inclinées sur l'axe O-O définies par les évidements 214 contribuent à transformer une partie de l'effort axial d'entrée en une composante radiale par rapport à l'axe O-O.
   Selon les modes de réalisation représentés sur les figures 2, 4 et 6, la paroi interne du conteneur 100 logeant les billes 150 est cylindrique de révolution autour de l'axe O-O.
   En variante, comme représenté sur les figures 13 et 14, la face interne 106 de la paroi 102 du conteneur 100 peut être munie de structures de section droite triangulaires ou équivalents 110.
   Ces structures 110 contribuent également à transformer l'effort qu'elles reçoivent des billes 150 adjacentes en une composante radiale et donc en contrainte tangentille sur le conteneur 100. Cette disposition permet là encore de réduire l'effort axial appliqué au conteneur 100.
   Les structures 110 peuvent être des structures annulaires centrées sur l'axe O-O. Il peut s'agir également de structures en spirale autour de l'axe.
   La section droite des structures 110 peut faire l'objet de nombreuses variantes. Selon la figure 13, les structures 110 ont une section droite en forme de triangle isocèle. Les deux faces 112, 114, orientées respectivement vers le piston-pénétrateur 200 et vers le fond du conteneur 100 sont symétriques. Elles présentent la même inclinaison sur l'axe O-O. Selon la figure 14, les structures 110 ont une section droite en forme de triangle rectangle. La face 112 de ces structures orientée vers le piston-pénétrateur 200 est éclinée sur l'axe O-O d'un angle typiquement compris entre 20 et 60°. Par contre, la seconde face 114 des structures 110, qui est dirigée vers le fond du conteneur 100 est orthogonale à l'axe O-O.
   Le mode de réalisation représenté sur la figure 15 présente plusieurs caractéristiques originales par rapport aux modes de réalisation antérieurement décrits.
   En premier lieu, la figure 15 se distingue des modes de réalisation antérieurs par le fait que le conteneur 100 n'est plus cylindrique de révolution autour de l'axe O-O. Le conteneur 100 est défini par une première jupe 120 tronconique évasée en éloignement de l'entrée du conteneur, suivi par une deuxième jupe 122 tronconique effilée en éloignement de l'entrée du conteneur.
   En second lieu, la figure 15 se distingue des modes de réalisation antérieurs par le fait que le conteneur 100 loge un insert 160. Cet insert 160 est placé dans la masse du bloc de billes 150. L'insert 160 peut faire l'objet de nombreux modes de réalisation. Selon la figure 15, l'insert 160 est formé d'un cone creux centré sur l'axe O-O et effilé en direction de l'entrée du conteneur 100. L'insert 160 peut être réalisé en tout matériau approprié, par exemple en métal ou plastique. Il est conçu pour répartir l'effort dans la masse des billes 150 d'une part, et surtout pour transformer encore une partie de l'effort axial, au moins partiellement, en une composante radiale.
   En troisième lieu, la figure 15 se distingue des modes de réalisation antérieurs par le fait qu'elle contient des billes 150 de diamètres différents. Plus précisément, selon la figure 15 il est prévu une première série de billes 152 de faible diamètre entre le contour d'ouverture du conteneur 100 et l'insert 160, et il est prévu une deuxième série de billes 154 entre l'insert 160 et le fond du conteneur 100.
   L'insert 160 représenté sur la figure 16 comprend une colorette 162 annulaire prolongée par différentes ailettes 164 convergentes.
   L'insert 160 représenté sur la figure 16 peut être réalisé en métal ou plastique.
   Bien entendu, l'insert 160 pourrait être formé d'un cone continu.
   On a représenté sur la figure 17, une variante de réalisation selon laquelle le conteneur 100 loge plusieurs inserts 160 répartis axialement dans la masse de billes 150. Selon la figure 17, il est prévu trois inserts 160 tronconiques évasés en direction du piston-pénétrateur 200. La représentation de la figure 17, ne doit pas être considérée comme limitative, que ce soit quant au nombre d'inserts représentés, ou à la géométrie de ceux-ci. Les lignes 150 n'ont pas été représentées sur la figure 17 pour simplifier l'illustration.
   La figure 17bis représente une variante des inserts de la figure 17, variante selon laquelle des troncs de cone 161 concentriques des cones 160 et de plus grand évasement sont placés sur l'extérieur de ces derniers.
   La figure 18 représente une variante de la figure 17. On retrouve sur la figure 18 différents inserts 160 répartis axialement dans la masse des billes 150. Toutefois selon la figure 18, les inserts 160 ne sont plus formés d'un cone unique. Ils sont formés d'un double cone. Plus précisément, les inserts 160 représentés sur la figure 18 comprennent un cone central 166 centré sur l'axe O-O et évasé en direction du piston 200, raccordé par leur bord avant à un tronc de cone externe 167 qui diverge en éloignement du piston 200.
   La figure 19 représente une autre variante de réalisation d'insert 160. Selon la représentation donnée sur la figure 19, l'insert 160 est formé d'un noyau centré sur l'axe O-O. Le noyau est délimité sur l'avant, par une première surface tronconique 168 qui converge vers le piston-pénétrateur 200 et sur l'arrière par une seconde surface tronconique 169 qui converge en éloignement du piston-pénétrateur 200. Les surfaces 168 et 169 peuvent être symétriques ou non. Il peut s'agir de surfaces tronconiques, paraboliques, sphériques ou similaires.
   Les billes 150 n'ont pas été représentées sur la figure 19 pour simplifier l'illustration.
   Selon les modes de réalisation représentés sur les figures 2 à 19, le système d'amortissement comprend un bloc de billes unique et un piston-pénétrateur 200 unique. En d'autres termes, les modes de réalisation représentés sur les figures 2 à 19, comprennent un seul étage d'amortissement.
   En revanche, les variantes de réalisation représentées sur les figures 20, 21 et 22 comprennent au moins deux étages d'amortissement montés en cascade.
   Pour cela, selon les modes de réalisation représentés sur les figures 20 à 22, il est prévu au moins un élément intermédiaire intercalé entre la référence fixe et l'élément mobile et susceptible de déplacement à translation à la fois par rapport à l'un et à l'autre de ceux-ci.
   Plus précisément, selon la figure 20, il est prévu un bloc de billes 150 logé dans un conteneur 100 entre deux pistons-pénétrateurs 200A, 200B. Le conteneur 100 de la figure 20 est un fourreau cylindrique centré sur l'axe O-O et ouvert à ses deux extrémités respectivement en direction des pistons 200A, 200B. Le piston 200A est solidaire de l'élément mobile, par exemple un tube d'arme coulissant. Le piston 200B est solidaire de la référence fixe, par exemple une épaulière.
   Lorsque le piston 200A est déplacé vers la référence fixe, le piston 200A pénètre dans le bloc de billes 150 créant un premier effet d'amortissement et déplace le bloc de billes contre le second piston 200B créant ainsi un deuxième effet d'amortissement.
   Selon la figure 21, il est prévu un double piston-pénétrateur 200 entre deux blocs de billes 150A, 150B. Le piston pénétrateur 200 comprend deux pistons symétriques et opposés 200A, 200B dirigés respectivement vers les blocs de billes 150A, 150B. Le bloc de billes 150A placé dans un conteneur 100A est solidaire de l'élément mobile. Le bloc de billes 150B placé dans un conteneur 100B est solidaire de la référence fixe.
   Lorsque l'élément mobile est déplacé vers la référence fixe, le bloc de billes 150A est déplacé contre le piston 200A créant un premier effet d'amortissement et déplace le piston 200B contre le deuxième bloc de billes 150B créant un deuxième effet d'amortissement.
   La variante de réalisation représenté sur la figure 22 se distingue des modes de réalisation représentés sur les figures 20 et 21 par le fait que l'élément intermédiaire mobile à la fois par rapport à la référence fixe à l'élément mobile n'est plus formé d'un bloc de billes ou d'un double piston mais comprend d'un côté un bloc de billes 150 de l'autre côté un piston 200.
   Bien entendu le bloc de billes 150 de l'élément intermédiaire doit être placé en regard d'un piston 200 complémentaire. Le piston 200 de l'élément intermédiaire doit être placé en regard d'un bloc de billes 150 complémentaire. L'élément intermédiaire constitue ainsi un module standard. On peut intercaler un nombre variable de modules amortisseurs entre l'élément mobile et la référence fixe en fonction de l'effort d'entrée et de l'amortissement souhaité.
   Comme indiqué précédemment, on a représenté sur les figures 23 à 28 des courbes relevées sur des systèmes d'arme. Chacune des figures 23 à 28 représente une première courbe C1 qui correspond à une mesure de pression dans le tube d'arme et une deuxième courbe C2 qui correspond à l'effort de sortie appliqué sur la référence fixe. La courbe C1 représente l'effort d'entrée appliqué sur l'amortisseur. Les échelles des courbes C1 et C2 sont différentes. Les échelles sont précisées sur la figure 29.
   Les conditions opératoires correspondant aux différentes courbes C1, C2 illustrées sur les figures 23 à 28 sont identifiées sur le tableau de la figure 29.
   On note que les courbes C2 des figures 23, 26, 27 et 28 sont généralement similaires à la figure 6, tandis que les courbes C2 des figures 24 et 25 sont généralement similaires à la figure 3.
   On a représenté sur les figures 30 et 31 deux variantes des systèmes représentés sur les figures 20, 21 et 22, adaptées pour constituer un ensemble type gigogne. C'est-à-dire que les différents étages d'amortissement montés en cascade, représentés sur les figures 30 et 31 sont conçus pour s'emboîter les uns dans les autres.
   Le système représenté sur la figure 30 est un ensemble gigogne simple. Il comprend un piston 200A lié à la référence fixe susceptible de pénétrer dans un bloc de billes 150A lui-même lié à un second piston 200B apte à pénétrer dans un deuxième bloc de billes 150B lié à l'élément mobile. Bien sûr, on peut prévoir de fixer le piston 200A à l'élément mobile et de fixer le bloc de billes 150B à la référence fixe. Le conteneur 100B logeant le bloc de billes 150B est de dimension supérieure au conteneur 100A logeant le bloc de billes 150A pour pouvoir recouvrir ce dernier conteneur.
   Le système représenté sur la figure 31 est un ensemble gigogne double. C'est-à-dire qu'il présente une symétrie par rapport à un plan X transversal à l'axe O-O de déplacement.
   Selon la figure 31 l'élément central du système amortisseur est formé d'un double bloc de billes. Il pourrait s'agir d'un double piston. De même, l'élément lié à la référence fixe et à l'élément mobile est formé d'un piston. Il pourrait s'agir d'un bloc de billes.
   Les billes peuvent être placées en vrac et non point en agencement régulier.
   Comme indiqué précédemment, le conteneur 100 et le piston 200 peuvent ne pas être de révolution. Il en est de même des inserts qui peuvent être formés de pyramides et non de cones.

## Revendications

1. Système amortisseur conçu pour être placé entre une référence fixe et un élément mobile par rapport à la référence fixe, comprenant :
- au moins un bloc de billes (150) comprenant une peau rigide, et
- au moins un piston-pénétrateur (200),
l'un des deux éléments : bloc de billes (150) et piston-pénétrateur (200) étant associé à la référence fixe, tandis que l'autre des deux éléments : bloc de billes et piston-pénétrateur est associé à l'élément mobile de sorte que la pénétration du piston dans le bloc de billes amortisse l'effort appliqué à la référence fixe suite à la déformation résultante de la peau de billes,
caractérisé par le fait que le piston-pénétrateur (200) est étagé, il présente un organe d'attaque (210) adjacent au bloc de billes (150), de forte dimension transversale, relié à un organe support (220) de plus faible dimension transversale.

2. Système amortisseur selon la revendication 1 caractérisé par le fait que la face avant (212) de l'organe d'attaque du piston-pénétrateur (200), c'est-à-dire la face dirigée vers le bloc de billes (150) est délimitée au moins partiellement par une surface inclinée sur l'axe (O-O) de déplacement relatif référence fixe/élément mobile.

3. Système amortisseur selon la revendication 2, caractérisé par le fait que la face avant (212) de l'organe d'attaque (210) du piston pénétrateur (200) est choisie dans le groupe comprenant les surfaces tronconiques, paraboliques, sphériques et pyramidales.

4. Système amortisseur selon l'une des revendications 1 à 3, caractérisé par le fait que la face avant (212) du piston-pénétrateur (200) est orthogonale à l'axe (O-O) de déplacement relatif référence fixe/ élément mobile.

5. Système amortisseur selon l'une des revendications 1 à 4 caractérisé par le fait que la différence entre la dimension transversale ou diamètre (A) de l'organe d'attaque (210) et la dimension transversale ou diamètre (S) de l'organe support (220) est au moins égale à deux fois préférentiellement à quatre fois le diamètre (D) des billes.

6. Système amortisseur selon l'une des revendications 1 à 5, caractérisé par le fait que la différence entre la dimension transversale ou diamètre (A) de l'organe d'attaque (210) et la dimension transversale ou diamètre interne (C) du conteneur (100) logeant le bloc de billes (150) est au moins égal à deux fois préférentiellement à quatre fois le diamètre (D) des billes (150).

7. Système amortisseur selon l'une des revendications 1 à 6 caractérisé par le fait que le piston-pénétrateur (200) comprend au moins un canal interne (230).

8. Système amortisseur selon la revendication 7 caractérisé par le fait que le piston-pénétrateur (200) comprend un canal central (230).

9. Système amortisseur selon la revendication 7, caractérisé par le fait que le piston-pénétrateur (200) comprend plusieurs canaux (230) équi-répartis autour de l'axe (O-O) du piston (200).

10. Système amortisseur selon l'une des revendications 7 à 9, caractérisé par le fait qu'au niveau de l'organe d'attaque (210) chaque canal est délimité par une surface évasée en direction du bloc de billes (150).

11. Système amortisseur selon la revendication 10, caractérisé par le fait qu'au niveau de l'organe support (220) chaque canal est délimité par un évidement de plus grande section que la petite section de la surface délimitant le canal (230) au niveau de l'organe d'attaque.

12. Système amortisseur selon l'une des revendications 1 à 11, caractérisé par le fait que le piston-pénétrateur (200) comprend un organe d'attaque (210) délimité au moins partiellement par des surfaces non cylindriques de révolution inclinées sur l'axe (O-O).

13. Système amortisseur selon l'une des revendications 1 à 12, caractérisé par le fait que le conteneur (100) logeant les billes (150) comprend des structures (110) de section droite triangulaire sur sa paroi interne.

14. Système amortisseur selon l'une des revendications 1 à 13, caractérisé par le fait que le conteneur (100) contient au moins un insert (160) dans la masse des billes (150).

15. Système amortisseur selon la revendication 14, caractérisé par le fait que l'insert (160) est tronconique ou pyramidal.

16. Système amortisseur selon la revendication 14, caractérisé par le fait que l'insert (160) est formé d'un double cone.

17. Système amortisseur selon la revendication 14, caractérisé par le fait que l'insert (160) est formé d'une colerette (162) et d'ailettes convergentes (164).

18. Système amortisseur selon l'une des revendications 14 à 17, caractérisé par le fait que le conteneur (100) loge plusieurs inserts (160).

19. Système amortisseur selon la revendication 14, caractérisé par le fait que l'insert (160) a la forme d'un noyau délimité par un double cone (168, 169) ou une double pyramide.

20. Système amortisseur selon l'une des revendications 1 à 19, caractérisé par le fait qu'il comprend un élément intermédiaire mobile à la fois par rapport à la référence fixe et à l'élément mobile.

21. Système amortisseur selon la revendication 20, caractérisé par le fait que l'élément intermédiaire comprend un bloc de billes (150) placé entre deux pistons (200A, 200B).

22. Système amortisseur selon la revendication 20, caractérisé par le fait que l'élément intermédiaire comprend un double piston (200A, 200B) placé entre deux blocs de billes (150A, 150B).

23. Système amortisseur selon la revendication 20, caractérisé par le fait que l'élément intermédiaire comprend un bloc de billes (150) solidaire d'un piston (200).

24. Système amortisseur selon l'une des revendications 1 à 23, caractérisé par le fait que la référence fixe est formée d'une épaulière, de poignées pour un tir à l'épaule, ou d'un affut, tandis que l'élément mobile est formé d'un tube d'arme guidé à coulissement par rapport à la référence fixe.

25. Système amortisseur selon l'une des revendications 1 à 24, caractérisé par le fait que les billes (150) sont métalliques.

26. Système amortisseur selon l'une des revendications 1 à 25, caractérisé par le fait que les billes (150) sont creuses.

27. Système amortisseur selon l'une des revendications 1 à 25, caractérisé par le fait que les billes (150) comprennent une peau extérieure rigide qui loge un noyau compressible.

28. Système amortisseur selon l'une des revendications 1 à 27, caractérisé par le fait que les billes (150) sont en nickel.

29. Système selon l'une des revendications 1 à 28, caractérisé par le fait qu'il comprend différents étages amortisseurs (200A, 150A ; 200B, 150B) montés en cascade et conçus pour s'emboîter les uns dans les autres à la façon d'un ensemble gigogne.

## Patentansprüche

1. Dämpfungssystem, das zwischen eine feste Referenz und ein in bezug auf die feste Referenz bewegliches Element zu bringen ist, mit:
- wenigstens einem Block aus Kugeln (150), der eine starre Haut aufweist, und
- einem Eindringkolben (200),
wobei das eine der beiden Elemente: Block aus Kugeln (150) und Eindringkolben (200) der festen Referenz zugeordnet ist, während das andere der beiden Elemente: Block aus Kugeln und Eindringkolben dem beweglichen Element zugeordnet ist, derart, daß das Eindringen des Kolbens in den Block aus Kugeln die auf die feste Referenz aufgegebene Kraft als Folge der sich ergebenden Deformation der Haut der Kugeln dämpft, dadurch gekennzeichnet, daß der Eindringkolben (200) stufenartig aufgebaut ist, er ein Angriffselement (210) benachbart dem Block aus Kugeln (150) hat, mit großer Querabmessung, verbunden mit einem Trägerelement (220) geringerer Querabmessung.

2. Dämpfungssystem nach Anspruch 1, dadurch gekennzeichnet, daß die vordere Fläche (212) des Angriffselementes des Eindringkolbens (200), das heißt, die auf den Block aus Kugeln (150) gerichtete Fläche, wenigstens teilweise durch eine gegen die Achse (O-O) der relativen Verlagerung feste Referenz/bewegbares Element geneigte Fläche begrenzt ist.

3. Dämpfungssystem nach Anspruch 2, dadurch gekennzeichnet, daß die vordere Fläche (212) des Angriffselementes (210) des Eindringkolbens (200) aus der Gruppe gewählt ist, die die kegelstumpfartigen, parabolischen, kugelartigen und pyramidenartigen Flächen umfaßt.

4. Dämpfungssystem nach einem der Ansprüche 1 bis 3, dadurch gekennzeichnet, daß die vordere Fläche (212) des Eindringkolbens (200) orthogonal zu der Achse (O-O) der relativen Verlagerung feste Referenz/bewegbares Element ist.

5. Dämpfungssystem nach einem der Ansprüche 1 bis 4, dadurch gekennzeichnet, daß die Differenz zwischen der Querabmessung oder dem Durchmesser (A) des Angriffselements (210) und der Querabmessung oder dem Durchmesser (S) des Trägerelements (220) wenigstens gleich dem Zweifachen, bevorzugt dem Vierfachen des Durchmessers (D) der Kugeln ist.

6. Dämpfungssystem nach einem der Ansprüche 1 bis 5, dadurch gekennzeichnet, daß die Differenz zwischen der Querabmessung oder dem Durchmesser (A) des Angriffselements (210) und der Querabmessung oder dem inneren Durchmesser (C) des Behälters (100), in dem der Block aus Kugeln (150) untergebracht ist, wenigstens gleich dem Zweifachen, bevorzugt dem Vierfachen des Durchmessers (D) der Kugeln ist.

7. Dämpfungssystem nach einem der Ansprüche 1 bis 6, dadurch gekennzeichnet, daß der Eindringkolben (200) wenigstens einen inneren Kanal (230) aufweist.

8. Dämpfungssystem nach Anspruch 7, dadurch gekennzeichnet, daß der Eindringkolben (200) einen Mittelkanal (230) aufweist.

9. Dämpfungssystem nach Anspruch 7, dadurch gekennzeichnet, daß der Eindringkolben (200) mehrere Kanäle (230) aufweist, die um die Achse (O-O) des Kolbens (200) gleichverteilt sind.

10. Dämpfungssystem nach einem der Ansprüche 7 bis 9, dadurch gekennzeichnet, daß auf der Höhe des Angriffselements (210) jeder Kanal durch eine in Richtung auf den Block aus Kugeln (150) aufgeweitete Fläche begrenzt ist.

11. Dämpfungssystem nach Anspruch 10, dadurch gekennzeichnet, daß auf der Höhe des Trägerelementes (220) jeder Kanal durch eine Ausnehmumg mit größerem Querschnitt als dem kleinen Querschnitt der Fläche, die den Kanal (230) auf der Höhe des Angriffselements begrenzt, begrenzt ist.

12. Dämpfungssystem nach einem der Ansprüche 1 bis 11, dadurch gekennzeichnet, daß der Eindringkolben (200) ein Angriffselement (210) aufweist, das zumindest teilweise durch nicht-zylindrische Umlaufflächen, die zu der Achse (O-O) geneigt sind, begrenzt ist.

13. Dämpfungssystem nach einem der Ansprüche 1 bis 12, dadurch gekennzeichnet, daß der Behälter (100), in dem die Kugeln (150) untergebracht sind, Strukturen (110) mit dreieckigem Querschnitt auf seiner Innenwand aufweist.

14. Dämpfungssystem nach einem der Ansprüche 1 bis 13, dadurch gekennzeichnet, daß der Behälter (100) wenigstens einen Einsatz (160) in der Masse der Kugeln (150) hat.

15. Dämpfungssystem nach Anspruch 14, dadurch gekennzeichnet, daß der Einsatz (160) kegelstumpfförmig oder pyramidenartig ist.

16. Dämpfungssystem nach Anspruch 14, dadurch gekennzeichnet, daß der Einsatz (160) aus einem Doppelkegel gebildet ist.

17. Dämpfungssystem nach Anspruch 14, dadurch gekennzeichnet, daß der Einsatz (160) aus einem Kragen (162) und aufeinander zu laufenden Flügeln (164) gebildet ist.

18. Dämpfungssystem nach einem der Ansprüche 14 bis 17, dadurch gekennzeichnet, daß in dem Behälter (100) mehrere Einsätze (160) untergebracht sind.

19. Dämpfungssystem nach Anspruch 14, dadurch gekennzeichnet, daß der Einsatz (160) die Form eines Kerns hat, begrenzt durch einen Doppelkegel (168, 169) oder eine Doppelpyramide.

20. Dämpfungssystem nach einem der Ansprüche 1 bis 19, dadurch gekennzeichnet, daß es ein gleichzeitig in bezug auf die feste Referenz und auf das bewegliche Element bewegbares zwischengeschaltetes Element aufweist.

21. Dämpfungssystem nach Anspruch 20, dadurch gekennzeichnet, daß das zwischengeschaltete Element einen Block aus Kugeln (150) aufweist, der zwischen zwei Kolben (200A, 200B) gebracht ist.

22. Dämpfungssystem nach Anspruch 20, dadurch gekennzeichnet, daß das zwischengeschaltete Element einen Doppelkolben (200A, 200B) aufweist, der zwischen zwei Blöcke aus Kugeln (150A, 150B) gebracht ist.

23. Dämpfungssystem nach Anspruch 20, dadurch gekennzeichnet, daß das zwischengeschaltete Element einen Block aus Kugeln (150) aufweist, der einteilig mit einem Kolben (200) ist.

24. Dämpfungssystem nach einem der Ansprüche 1 bis 23, dadurch gekennzeichnet, daß die feste Referenz aus einem Achselstück, Griffen für einen Schulterschießstand oder einem Anstand gebildet ist, während das bewegliche Element durch ein Waffenrohr gebildet ist, das gleitbar in bezug auf die feste Referenz geführt ist.

25. Dämpfungssystem nach einem der Ansprüche 1 bis 24, dadurch gekennzeichnet, daß die Kugeln (150) metallisch sind.

26. Dämpfungssystem nach einem der Ansprüche 1 bis 25, dadurch gekennzeichnet, daß die Kugeln (150) hohl sind.

27. Dämpfungssystem nach einem der Ansprüche 1 bis 26, dadurch gekennzeichnet, daß die Kugeln (150) eine äußere starre Haut aufweisen, in der ein komprimierbarer Kern untergebracht ist.

28. Dämpfungssystem nach einem der Ansprüche 1 bis 27, dadurch gekennzeichnet, daß die Kugeln (150) aus Nickel sind.

29. Dämpfungssystem nach einem der Ansprüche 1 bis 28, dadurch gekennzeichnet, daß es verschiedene Dämpfungsstufen (200A, 150A; 200B, 150B) aufweist, die in Kaskade gebaut sind und dazu gedacht sind, sich nach der Art einer ineinandergeschobenen Gesamtheit ineinander schachteln.

## Claims

1. A shock-absorbing system designed to be placed between a fixed reference and a moving element that is movable relative to the fixed reference, comprising:
at least one block of balls (150) having rigid skins; and
at least one plunger piston (200);
one of the above two components, namely the block of balls (150) and the plunger piston (200), being associated with the fixed reference, and the other one of said two components, namely the block of balls and the plunger piston, being associated with the moving element in such a manner that penetration of the piston into the block of balls absorbs the shock applied to the fixed reference because of the resulting deformation of the skins of the balls, the system being characterized by the fact that the plunger piston (200) is stepped, having, adjacent to the block of balls (150), a head (210) of larger transverse size connected to a support (220) of smaller transverse size.

2. A shock-absorbing system according to claim 1, characterized by the fact that the front face (212) of the head of the plunger piston (200), i.e. its face facing the block of balls (150) is delimited at least in part by a surface that slopes relative to the axis (0-0) of relative displacement between the fixed reference and the moving element.

3. A shock-absorbing system according to claim 2, characterized by the fact that the front face (212) of the plunger piston (200) is selected from the group of surfaces comprising frustoconical, parabolic, spherical, and pyramid-shaped surfaces.

4. A shock-absorbing system according to any one of claims 1 to 3, characterized by the fact that the front face (212) of the plunger piston (200) is orthogonal to the axis (0-0) of relative displacement between the fixed reference and the moving element.

5. A shock-absorbing system according to any one of claims 1 to 4, characterized by the fact that the difference between the transverse size or diameter (A) of the head (210) and the transverse size or diameter (S) of the support (220) is not less than twice and is preferably four times the diameter (D) of the balls.

6. A shock-absorbing system according to any one of claims 1 to 5, characterized by the fact that the difference between the transverse size or diameter (A) of the head (210) and the transverse size or inside diameter (C) of the container (100) housing the block of balls (150) is not less than twice and is preferably four times the diameter (D) of the balls (150).

7. A shock-absorbing system according to any one of claims 1 to 6, characterized by the fact that the plunger piston (200) includes at least one internal channel (230).

8. A shock-absorbing system according to claim 7, characterized by the fact that the plunger piston (200) includes a central channel (230).

9. A shock-absorbing system according to claim 7, characterized by the fact that the plunger piston (200) includes a plurality of channels (230) uniformly distributed around the axis (0-0) of the piston (200).

10. A shock-absorbing system according to any one of claims 7 to 9, characterized by the fact that within the head (210) each channel is delimited by a surface that flares towards the block of balls (150).

11. A shock-absorbing system according to claim 10, characterized by the fact that within the support (220) each channel is delimited by an opening of larger section than the smallest section of the surface delimiting the channel (230) within the head.

12. A shock-absorbing system according to any one of claims 1 to 11, characterized by the fact that the plunger piston (200) includes a head (210) delimited at least in part by surfaces that slope relative to the axis (0-0) but that are not surfaces of revolution.

13. A shock-absorbing system according to any one of claims 1 to 12, characterized by the fact that the container (100) housing the balls (150) includes structures (110) of triangular right cross-section on its inside wall.

14. A shock-absorbing system according to any one of claims 1 to 13, characterized by the fact that the container (100) contains at least one insert (160) in the mass of balls (150).

15. A shock-absorbing system according to claim 14, characterized by the fact that the insert (160) is frustoconical or pyramid-shaped.

16. A shock-absorbing system according to claim 14, characterized by the fact that the insert (160) is in the form of two cones.

17. A shock-absorbing system according to claim 14, characterized by the fact that the insert (160) is in the form of a collar (162) and converging fins (164).

18. A shock-absorbing system according to any one of claims 14 to 17, characterized by the fact that the container (100) houses a plurality of inserts (160).

19. A shock-absorbing system according to claim 14, characterized by the fact that the insert (160) is in the form of a core delimited by two cones (168, 169) or by two pyramids.

20. A shock-absorbing system according to any one of claims 1 to 19, characterized by the fact that it includes an intermediate element that moves both relative to the fixed reference and relative to the moving element.

21. A shock-absorbing system according to claim 20, characterized by the fact that the intermediate element comprises a block of balls (150) placed between two pistons (200A, 200B).

22. A shock-absorbing system according to claim 20, characterized by the fact that the intermediate element comprises a double-headed piston (200A, 200B) placed between two blocks of balls (150A, 150B).

23. A shock-absorbing system according to claim 20, characterized by the fact that the intermediate element comprises a block of balls (150) secured to a piston (200).

24. A shock-absorbing system according to any one of claims 1 to 23, characterized by the fact that the fixed reference is constituted by a butt or by handles for shooting from the shoulder, or by a gun mount, whereas the moving element is in the form of a weapons tube guided to slide relative to the fixed reference.

25. A shock-absorbing system according to any one of claims 1 to 24, characterized by the fact that the balls (150) are made of metal.

26. A shock-absorbing system according to any one of claims 1 to 25, characterized by the fact that the balls (150) are hollow.

27. A shock-absorbing system according to any one of claims 1 to 26, characterized by the fact that the balls (150) comprise a rigid outer skin containing a compressible core.

28. A shock-absorbing system according to any one of claims 1 to 27, characterized by the fact that the balls (150) are made of nickel.

29. A system according to any one of claims 1 to 28, characterized by the fact that it comprises a plurality of shock-absorbing stages (200A, 150A; 200B, 150B) mounted in cascade and designed to nest one within another.
